# EUROPEAN PATENT SPECIFICATION

(11) **EP 0 795 034 B1**
(45) Date of publication and mention of the grant of the patent: **19.09.2001**
(21) Application number: 94913239.3
(22) Date of filing: 15.04.1994
(51) Int. Cl.: C13K 1/02

(54) **METHOD FOR HYDROLYSIS OF MATERIAL CONTAINING CELLULOSE AND/OR STARCH**
VERFAHREN ZUR HYDROLYSE VON MATERIALIEN, DIE ZELLULOSE UND/ODER STÄRKE ENTHALTEN
PROCEDE D'HYDROLYSE DE MATERIAUX CONTENANT DE LA CELLULOSE ET/OU DE L'AMIDON

(30) Priority: 16.04.1993 SE 9301263
(43) Date of publication of application: 17.09.1997
(73) Proprietor: Regalco Engineering AB, 181 03 Lidingö (SE)
(72) Inventor: NILSSON, Kjell, S-181 65 Lidingö (SE)
(74) Representative: Waldinger, Ake
(86) International application number: SE9400336
(87) International publication number: WO9424316

(56) References cited:
- EP-A- 0 037 912
- US-A- 4 400 218
- US-A- 5 114 488

## Description

The present invention relates to a method for establishing chemical reactions and a continous hydrolysis of cellulose and/or starch containing materials in a tubular reactor with an inlet and an outlet end.

Hydrolysis of cellulose and crops rich in starch such as corn, etc. mostly occurs in an acid environment with a pH-value of 0 - 4 and under an elevated temperature. Consequently considerable demands are placed on the materials in the reactor and the system. The materials used are mostly zirkonium and metals or alloys with a corresponding or a better resistance to low pH-values and elevated temperatures.

The equipment used for hydrolysis may consist of a system with heat exchangers, in which the raw material to be hydrolyzed is indirectly heated with the flash steam from the process followed by a reactor. The number of heat exchangers and flash tanks can vary in each case depending on the energy costs. However, the complete system with a reactor, flash tanks and the steam part of the heat exchangers must consist of the same high quality material, implying a system with a very high cost level.

As stated, the hydrolysis is in many cases occuring at elevated temperatures and consequently at high pressures as well as at low pH-values, e.g. at a temperature of 180 to 240 centigrades, a pressure of 30 to 35 bar and a pH-value of approximately 1. Hitherto used solutions for systems are providing a sugar yield - glucose yield - of about 30 to 60 percent. Hydrolysis with a strong acid is normally performed at lower temperatures. The hydrolysis reaction velocity is determined by the temperature and the pH-value. An elevated temperature and low a pH-value provides a high reaction velocity.

The hydrolysis with a strong acid, at a pH-value less than 1, the hydrolysisis is mostly carried out at a temperature of less than 100 centigrades. This is due to the reaction velocity becoming too high and uncontrollable with the known system solutions. With a pH-value between 1 and 4 the hydrolysis is performed in the temperature interval between 180 and 240 centigrades. Moreover, the reaction velocity in this interval becomes relatively high and therefore becomes difficult to control.

In both cases the reaction control, and consequently the yield control of the product being produced, is obstructed at low pH-values and elevated temperatures.

All natural cellulose comprises various grades of cristallinity and consequently the cellulose reactivity becomes a function of this cristallinity. A high degree of cristallinity implies a lower reactivity.

Therefore, the least cristalline parts of the cellulose are, during hydrolysis, reacting at first. In most cases 50 percent of the cellulose is reacting relatively easily. As stated above, the remaining part is cristalline to a higher degree and requires a longer reaction period to be hydrolyzed. Therefore, to hydrolyze all the cellulose is in principle rather easy with the technology available today, only the retention time in the reactor is prolonged. However, this will result in that the cellulose hydrolyzed to glucose also will have a longer retention time which is negative, because the glucose in the reactor will then have the opportunity to be further oxidized to become hydroxymethylfurfural, HMF. Therefore, the net result of an extended retention time will not be a higher glucose yield, but a substantial content of HMF in the liquid phase after the hydrolysis.

Another alternative to hydrolyze the major part of the cellulose is to increase the temperature causing an expansion of the cristalline parts of the cellulose, thereby creating conditions for hydrolysis of a substantially larger portion. As previously mentioned, the reaction velocity, however, is increasing with rising temperatures and consequently the need for an exact control mainly of the reaction time is heavily increased with rising temperatures.

In present system solutions there are no possibilities to effectively control the process, due to that:
- the retention time for the material in the reactor system is scattered too much in relation to the reaction period,
- it is difficult to achieve a well defined reaction period, when the reaction is started and/or concluded at a temperature which is lower than the desired reaction temperature.

A higher temperature in the present systems is therefore at its best giving marginal yield increases, and more often a lower yield is obtained.

In many cases the hydrolysis of biomaterials, e.g. wood material, is preferably performed in two steps: A first step of mainly decomposing the hemicellulose under mild conditions. After sugar species have been separated, the cellulose can then be decomposed under much harder conditions in a second step. The reason for the two steps is that the obtained sugar species from the first step easily react further and/or are the base for further end products if exposed to the conditions prevailing during the second step.

A prehydrolysis in the first step can be obtained in many ways, but normally by acid hydrolysis (pH-value 1,5 to 4,0) at a moderate temperature (100 to 190 centigrades). The acidizing is achieved by those acids which are liberated during the heat treatment of the biomass or by adding anorganic acids, such as sulphuric acid, hydrochloric acid or by means of e.g. sulphur dioxide. Irrespective of which one of the ways mentioned above is chosen the biomass will after the first hydrolysis step be drained of the main portion of its hemicellulose content. Generally only lignin and cellulose remain.

During the second step of hydrolysis the issue is to decompose the cellulose as quickly and effectively as possible and with the largest yield obtainable. Such a reaction requires a lower pH-value (0 to 2) and a higher temperature (180 to 275 centigrades). Generally, with lower pH-value and higher temperatures being used, the decomposing of the cellulose becomes quicker and more complete. The problem is to find convenient equipment in combination with an effective industrial process which is controllable and which can be motivated in costs.

One way of performing the hydrolysis with modern technology is the following: the prehydrolyzed biomass, PB, is fed via a so-called plug screw into an intermediate pressure vessel, where by means of steam the temperature and the pressure are maintained.

From this pressure vessel the PB is fed further via a second plug screw to the hydrolysis reactor. The pressure and the temperature are also maintained in this hydrolysis reactor by means of steam. The pressure is conveniently twice the pressure in the intermediate pressure vessel. During feeding into the hydrolysis reactor the PB, being compressed to a hard plug by the plug screw, may expand in fluid. The fluid consists of an acid solution with a pH-value chosen for the hydrolysis, e.g. pH = 1.

Then, the PB is raised by means of lifting screws out of the impregnating fluid and over to the reactor, a vertical tubular space with a mixer and an outlet device in the bottom.

The retention time is determined by the level in the reactor in combination with the materiall flow through the reactor.

The 'hydrolyzed' PB is blown out by means of the steam pressure in the reactor into a flash cyclone with a diluting tank beneath. The deflashed steam is taken to a heat exchanger to recover the remaining heat. The thus hydrolyzed PB is diluted with water in the dilution tank and is drained in a centrifuge, after which a dilution is performed with water containing alkali, e.g. ammonia, to be followed by another draining.

For the method described above all equipment coming into contact with the strongly acid environment required for the reaction performance should be made out of materials resisting a pH-value 1 at elevated temperatures. Such materials, e.g. monel, titan, zirconium are several times more expensive than stainless steel.

In the example mentioned above the whole reactor including the impregnating part from the feeding plug screw to the transport device, inclusively, should be made out of the said high class materials, as even the blow pipe to the flash cyclone, the flash cyclone itself, the diluting tank, the centrifuge, the heat exchanger, all tanks, pipes, valves, etc. The costs are correspondingly considerable. Moreover, the equipment becomes comprehensive and requires much space.

As the PB is heated in the presence of a strong acid reactions will occur during the heating phase. The screws, lifting the material out of the impregnating part to the main part of the reactor, will to some extent mix the material. Moreover, the same mixing is performed by the bottom mixer. A material column being fed by a mixer or something similar out to an outlet does not move with the same velocity over its cross section and instead veins of faster and slower passage flows will always be present.

All this together implies that the retention time for the PB can never be the same for all material. This implies that the material will have a fluctuating retention time around a medium value. At low pH-values and elevated temperatures small differences in reaction time will provide large yield variations, both too long and too short reaction periods implying a minor yield.

Experience has shown that usually only a cellulose conversion to glucose of 30 to 60 percent is obtained with the conditions the equipment described above is able to handle in combination with the effects an undefined retention time and undefined heating and cooling steps result in.

In addition to the high investment costs this known solution also implies high installation and building costs, probably the total costs will be ten times higher than calculated for an installation to perform the method according to the present invention.

EP-A-0 037 912, discloses a process for conversion of cellulose waste to glucose, which includes feeding continuously the raw material into an extruder, which has a reaction zone in which the material is continuously reacted in the presence of an acid catalyst at elevated pressure and temperature, and at least semi-continuously discharging the reacted material from said extruder while maintaining the elevated pressure and temperature in the reaction zone. This document discloses a way for extracting lignins from cellulose by injecting a steam of alkaline bisulfite liquor at elevated temperature into the reaction zone.

US-A-5,114,488, discloses an extrusion device for processing cellulosic materials, which has a pretreatment extrusion zone and a reaction extrusion zone separated by a presure sensitive variable die. The method for processing cellulosic material includes the steps of extruding the material through the pretreatment zone at elevated pressure and temperature, passing the material to the reaction zone where it is mixed with an acid and processed at lower pressure and temperature, and extruding the material through a final extrusion die.

US-A-4,400,218, discloses another extrusion device for processing glucose-containing materials, which comprises an intake region, a compression region in which high pressure and temperature is achieved, and a catalyst injection region in which the material is hydrolized.

These documents disclose methods for processing cellulose-based materials in which the hydrolisis reaction time is defined by the residence time of the raw material inside the reaction zone, whereby said residence time can be varied by shifting the input position of the acid catalyst (EP-A-0 037 912), by using pressure sensitive variable dies (US-A-5,114,488) or by varying the rotation speed of the conveyor and/or adjusting the pressure of the outlet valve (US-A-4,400,218).

The purpose of the invention is to achieve a method of the type mentioned initially, in which the inconveniences connected with known methods are mostly eliminated.

According to the invention this is achieved by providing the method with the characteristics specified in the claims to follow.

According to the invention a well defined reaction period is achieved, the reaction is starting instantaneously at the right temperature and is also stopped instantaneously. A more elevated temperature can be used implying that the cellulose reactivity is increased due to the fact that the reaction is started and stopped effectively, in a controlled way and instantaneously. Thereby, the whole reaction is performed at a well defined and controlled temperature. In addition to these advantages all parts of the material have the same retention time which is identical with the reaction period in the reactor. This implies that a minimum of formed glucose is further oxidated to HMF. The reaction conditions can simply be modified by means of additives and by changing the pressure, the temperature and the reaction time. Moreover, the process is particularly energy saving. Furthermore, a pretreatment of the cellulose can be performed in the parts used for heating. The required apparatus becomes very compact and simple with a minimal need for expensive construction materials and thereby even the costs will be limited, i.e. to about 10 percent of the costs for comparable equipment being used in known installations.

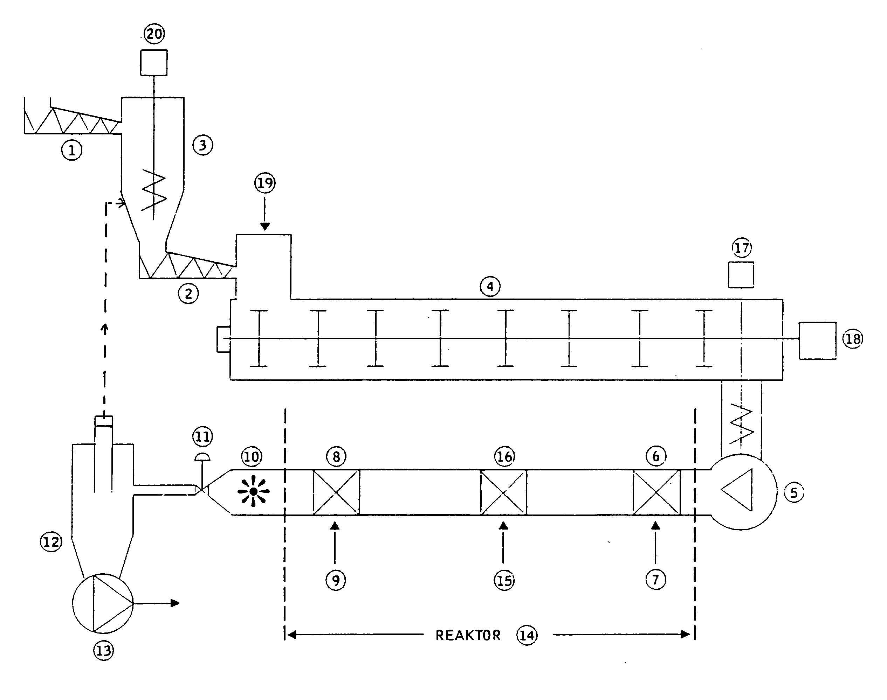

The process, according to the invention, is more clearly illustrated in the following with reference to the attached drawing, in the form of a flow chart, schematically showing a preferred embodiment of an example of an installation to perform the process according to the invention.

In the installation shown in the drawing the finely dispersed cellulose material, such as wooden chips, sawdust, straw, corn or other crops rich in starch is fed into in a first pressure vessel 3, equipped with a pressure tight feeding screw 1, a so-called plug screw, and a corresponding outlet screw 2, in such a way that a temperature of about 200 centigrades, corresponding to a steam pressure of about 15 bar, can be maintained with heat being added in a suitable way.

The outlet screw 2 is followed by a tubular heating vessel 4, in which the material with a relatively high pH-value is heated up further to about 230 centigrades and the pressure is increased to about 30 bar. The material during mixing is moved through the vessel 4 and is thereafter via a feeding screw 5 or similar transported to one end of a tubular reactor 14. The feeding is made to a mixer 6, to which sulphuric acid is added at 7 and extensively mixed within a limited zone with the material to be finally hydrolized. The pH-value of the material is thus set at a value, e.g. 1, suitable for the hydrolysis.

At the other end of the reactor 14 a similar mixer 8 is arranged to which alkalic chemicals at 9 are fed to neutralize the sulphuric acid and are intensively mixed within a limited zone with the material to be fed out from the mixer, whereby the hydrolysis of the material is momentarily stopped. At the reactor outlet 14 a screw or another rotor 10 is placed to let the material, which during the passage through the reactor 14 is occupying its whole cross section, pass in a steady flow out through a valve 11.

To reduce the energy costs or for other reasons the material can be fed out to a pressurized vessel 12 with essentially the same pressure as in the pressure vessel 3. From vessel 12 the hydrolyzed material is passed through an outlet gate 13.

If necessary, at least one further mixer 16 of the same kind as the mixers 6 and 8 can be arranged in the reactor 14 between both said mixers 6 and 8 to intermix further chemicals at 15 and/or for changing the conditions at 16. The reaction products of the first step can then be regarded as intermediate compounds to create further compounds as final products due to the changed conditions and/or chemical additives at 16. Then, the first step may be a hydrolyzing step.

By adding a chemical, intensively and effectively cooling, or performing other measures effective to freeze a chemical reaction process, products can be produced in an economically very effective way, which is not possible with known technology.

Other possibiliites of this system are a reaction with intermediate compounds. Such a process implies adding of a suitable chemical at a certain mixer to react with an intermediate compound to achieve a desired product.

Eventually, the material transport from the vessel 4 to the feeding pump 5 may in accordance with the drawing have to be supported by a motor driven feeder 17. Also, the material passage through the vessel 4 can advantageously be supported by a rotatable mixer 18, especially as an effective mixing is advantageous here, when chemicals may have to be added for a pretreatment at the vessel inlet portion to be possibly effected at 19. Also in the pressure vessel 3, being principally of the same type as the vessel 4, a mixer 20 can be conveniently arranged for dispersing the material being fed by the feeder screw 1, usually in form of a material plug and for mixing it during the heating, which conveniently is performed by means of injected steam and/or flash steam from the pressure vessel 12.

The process described here provides the possibility of operating at a substantially higher reaction temperature, the reaction period being effectively controlled and the reaction being stopped exactly at the right moment, a further reaction of the glucose to hydroximethylfurfural being substantially reduced. Thereby the possibility of increasing the glucose yield up to the theoretically possible limit due to the reactivity of the cellulose crystalline portions is dramatically increased by the higher temperature. Moreover, a further glucose reaction to HMF is prevented by stopping the reaction distinctly and in a very controlled way.

In order to examplify the process according to the invention two examples are demonstrated here below.

### Example 1

### Final hydrolysis in a two step hydrolysis.

The first step of the hydrolysis, the so-called prehydrolysis, can be performed in many different ways. The prehydrolyzed cellulose is after the prehydrolysis generally totally free from the so-called hemicellulose. The remaining part from the prehydrolysis is washed in several steps. After the last step, where the cellulose rest concentration is adapted to the need in the main hydrolysis the material is transported to the feeder screw 1, see the drawing.

When coniferous wood is used for the hydrolysis the material has a cellulose content of about 53 percent and the remaining part of about 47 percent consists of lignin and extractive materials, etc.

The material is fed continously into the screw 1 or similar pump and a plug is formed providing a high pressure in the pressure vessel 3 and thus a higher temperature. The material is heated in the vessel 3 by means of flash steam being generated in the pressure vessel 12 and the material is heated from 85 to 200 centigrades corresponding to a pressure of 15 bar.

The discharge of the material is made via a plug screw 2 or a corresponding pump, in which a plug is formed permitting a high pressure, to the tubular vessel 4, where the material is effectively mixed with steam to heat the material up to the temperature desired in the hydrolysis step. The retention time in vessel 4 is less than 5 minutes.

In this case the material is heated with steam up to a temperature of 250 centigrades and conveniently the vessel 3 is pressure controlled to achieve an exact relationship between pressure and temperature by means of a pipe (not shown) from the vessel 4, or alternatively by means of external steam.

The material in the vessel 4 is transported by means of several rotatable blades designed in such a way that a maximum contact is achieved between the steam and the material. The heated material is led to a shaft, at the end of which a pump 5 is arranged to feed the material into the reactor 14 in the form of a tube with a diameter of 300 mm and a length of 8,2 m. Its capacity is ten tons of dry material per hour.

The dynamic mixer 6 is arranged after the pump 5 in the reactor 14 to intermix sulphuric acid so that a momentary adjustment of the pH-value of the material is achieved to become 0,5 to 1,0. The reaction period in the reactor 14 being completed the reaction is stopped momentarily by means of the mixer 8, in which an adapted amount of alkali is added to neutralize the sulphuric acid.

The reactor content is discharged to the pressure vessel 12 being a flash cyclone with essentially the same pressure as the pressure vessel 3. The hydrolyzed pulp is discharged from the cyclone 12 and is washed in four steps to recover the glucose being generated. The rest consists of 10 percent cellulose and 90 percent lignin and extractive material. This means a glucose yield of 90 percent to be compared with a yield of 30 to 60 percent achieved with known technology. Thus, the process of the invention implies a production of so-called native lignin as well as considerable amounts of glucose.

### Example 2

One step hydrolysis with wood chips as raw material.

Chips, forest chips and sawdust are convenient raw materials to be hydrolyzed in one step, the purpose being to produce furfural, glucose and lignin. The raw material is cleaned of impurities, conveniently in a screen and by washing before being used in the process.

If the raw material has an uneven size distribution it is advantageous to pulverize it and to refine it in a refiner before being used in the process.

After screening, washing and homogenizing the raw material is fed to the plug screw 1, see drawing, feeding the raw material to the pressure vessel 3 having a pressure of 15 bar. There the material is heated up to a temperature corresponding to the pressure by means of steam. A rotor in the vessel is disintegrating the material from the plug screw in such a way to achieve a maximum heat transfer. From the vessel 3 the material is transported to the vessel 4, where further heating is performed by means of steam up to a temperature of 250 centigrades. Here the retention time is 2 minutes. The length of the vessel is 8,7 m and its diameter 0,7 m.

From the vessel 4 the material is transported to the reactor 14 having a length of 11 m and a diameter of 0,3 m. In the mixer 6 the pH-value is momentarily adjusted to be less than 1. When the desired reaction period in the reactor 14 is completed the reaction is stopped momentarily by intermixing of alkali in the mixer 8. In accordance with the previous example the material from the reactor is washed and after filtration a filtrate is achieved containing glucose, furfural and hydoximetylfurfural. Both the last mentioned components are stripped by means of steam from the filtrate. By a destillation of the condensate during stripping furfural and hydoximethylfurfural are obtained as products. The remnant after stripping is fermented to alcohol. The washed residues, the so-called solid phase, is dried and can be used further as raw material in other processes, based on lignin, or alternatively used as fuel.

If the reaction is not stopped in time during hydrolyzation the sugars will be oxidized on to other compounds. Pentoses will convert to furfural and hexoses to hydoximethylfurfural, HMF. Certain organic acids can also be formed. During the hydrolysis process a fraction of these so-called impurities will be formed. If the purpose is to produce sugar for a further fermentation to ethanol, these fractions will become a poison for the fermentation process. A high content will result in the fermentation fungies dying. The oxidation of the sugar being produced, to furfural and HMF, is performed according to a balance equation 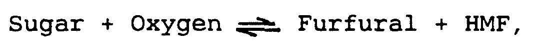 implying that the reaction can be influenced by varying the reactants and products involved. By adding materials existing at the right side in the balance reaction above, the reaction being 'pressed' to the left and vice viersa. This implies that for a process according to claim 7 the flash steam being transported from the pressure vessel 12 to the pressure vessel 3, is also transferring the furfural and the HMF contained in the flash steam. By this concentration of furfural and HMF, on the right side of the balance reaction, the forming of these impurities is reduced as well as the oxidation of sugar. This is posivite for the fermentation process to follow.

The process of the invention provides a perfect means for producing lignin which is free of sulphur and other impurities. By a proper choice of the conditions a lignin can be produced according to ones wishes. If one asks for a lignin free of cellulose the reactor is prolonged and/or the temperature is raised. The treatment of the lignin with external chemicals can be performed by mixing these chemicals with the lignin by means of the mixer 16 being arranged so that optimal reaction periods are obtained in each specific case.

By installing a screen in the discharge end of the reactor 14, through which the lignin may pass, certain advantages can be achieved. With this arrangement optimal conditions can be selected when no consideration has to be paid to any yield, as the solid substance which cannot pass the screen can be recirculated to the reactor 14 until substantially all material has been hydrolyzed.

Obviously, the invention is not limited to the examples demonstrated above but can be modified in various ways within the frame of the invention defined in the claims. Accordingly, the parts called plug screws may alternatively consist of pumps, sluice valves, etc. The valve 11 can alternatively consist of a sluice valve and the discharge valve 13 can be a pump or a screw. Moreover, the vessel 4 and the reactor 14 can eventually been arranged vertically or inclined. Furthermore, the mantle surfaces of the reactor 14 can be cooled or heated along certain zones to cool or heat the material in the reactor near the mantle surfaces to minimize the sliding friction. The discharge end of the reactor can even be adapted to dischrage the material directly to a conveniently designed prolongation of the reactor, where a post treatment by further reactions may be performed without disturbing the material flow.

## Claims

1. A process for achieving chemical reactions and a continous hydrolysis of cellulose and/or starch containing materials in a tubular reactor (14) with an inlet end and a discharge end, **characterized in that** the material, being either chemically untreated or consisting of biomaterials which somehow previously has been treated or being processed in e.g. a prehydrolysis for in such a case providing an original material with a reduced content of hemicellulose, is fed with simultaneous mixing through a tubular vessel (4) and is with a temperature being adapted for a hydrolysis and a corresponding pressure transported to the inlet end of the reactor (14), where the material within a limited zone (6) is exposed to an intensive mixing with chemicals (7) being added there, which momentarily are adjusting the material to a low pH-value and are starting a hydrolysis, which is stopped at the discharge end of the reactor (14), where the material within a limited zone (8) is exposed to an intensive mixing with chemicals (9), e.g. alkali, being added there, which momentarily are neutralizing the material, thereby stopping the hydrolysis.

2. A process according to claim 1, **characterized in that** the tubular reactor (14) between the two mixing zones (6, 8) is kept filled with material over its whole cross section.

3. A process according to claim 1 or 2, **characterized in that** at least one further mixing zone (16) is arranged in the reactor (14) for intermixing further chemicals (15) for the purpose of producing products with intermediate compounds being produced by a reaction up to the further mixing zone and constituting at least one of the reactants in the produced product.

4. A process according to anyone of the claims 1-3, **characterized in that** the mantle surfaces of the reactor (14) are cooled or heated along at least one definite zone to achieve a partial cooling or heating, respectively, of the material in the reactor near the mantle surfaces to minimize the sliding friction.

5. A process according to anyone of the claims 1-4, **characterized in that** the pH-value during the hydrolysis in the reactor (14) is less than 1, the pressure being 30 to 34 bar and the temperature being 190 to 240 centigrades.

6. A process according to anyone of the claims 1-4, **characterized in that** the pH-value during the hydrolysis in the reactor (14) is less than 2, the pressure being more than 34 bar and the temperature being more than 240 centigrades.

7. A process according to anyone of the claims 1-6, **characterized in that** the feeding of the material into the vessel (4) is performed via a first pressure vessel (3) equipped with feeder and discharge screws (1, 2), corresponding pumps or similar, in which the material is heated with simultaneous mixing at a pressure being generally half the pressure in the vessel (4), and the discharge of the material from the reactor (14) is made via a valve (11) to another pressure vessel (12) equipped with a discharge device (13), from which flash steam is led through a pipe to said first pressure vessel (3).

8. A process according to claim 7, **characterized in that** the material being discharged from the reactor (14) is passing a screening in a screen, where the lignin is passed, whereas the solid, not hydrolyzed phase is separated and recirculated through the reactor (14) until substantially all material has been hydrolyzed.

## Patentansprüche

1. Verfahren zur Durchführung chemischer Reaktionen und einer kontinuierlichen Hydrolyse von Zellulose und/oder Stärke enthaltenden Materialien in einem röhrenförmigen Reaktor (14) mit einem Einlaßende und einem Auslaßende, **dadurch gekennzeichnet, daß** das Material, das entweder chemisch unbehandelt ist oder aus Biomaterialien bestehend zuvor behandelt oder beispielsweise in einer Vorhydrolyse bearbeitet worden ist, um in einem solchen Fall einen Ausgangszustand mit einem reduzierten Gehalt an Hemizellulose zu schaffen, unter gleichzeitigem Mischen durch einen röhrenförmigen Behälter (4) geleitet und mit einer für eine Hydrolyse geeigneten Temperatur und einem entsprechenden Druck zum Einlaßende des Reaktors (14) transportiert wird, wo das Material innerhalb einer begrenzten Zone (6) einem intensiven Vermischen mit dort zugesetzten Chemikalien (7) ausgesetzt wird, die das Material augenblicklich auf einen niedrigen pH-Wert einstellen und eine Hydrolyse in Gang setzen, die am Auslaßende des Reaktors (14) gestoppt wird, wo das Material innerhalb einer begrenzten Zone (8) einer intensiven Vermischung mit dort zugegebenen Chemikalien, wie z. B. Alkali, ausgesetzt wird, die das Material kurzfristig neutralisieren und dadurch die Hydrolyse stoppen.

2. Verfahren nach Anspruch 1, **dadurch gekennzeichnet, daß** der röhrenförmige Reaktor (14) zwischen den beiden Mischern (6, 8) über seinen gesamten Querschnitt mit Material befüllt gehalten wird.

3. Verfahren nach Anspruch 1 oder 2, **dadurch gekennzeichnet, daß** wenigstens eine weitere Mischzone (16) in dem Reaktor (14) zum Beimischen weiterer Chemikalien (15) zum Zwecke des Erzeugens von Produkten mit Zwischenkomponenten angeordnet ist, die durch eine Reaktion bis zu der weiteren Mischzone entstehen und wenigstens einen der Reaktionspartner in dem hergestellten Produkt bilden.

4. Verfahren nach einem der Ansprüche 1 bis 3, **dadurch gekennzeichnet, daß** die Mantelflächen des Reaktors (14) entlang wenigstens einer bestimmten Zone gekühlt oder erwärmt werden, um ein teilweises Kühlen bzw. Erwärmen des Materials in dem Reaktor nahe der Mantelflächen zu erreichen, um die Gleitreibung zu minimieren.

5. Verfahren nach einem der Ansprüche 1 bis 4, **dadurch gekennzeichnet, daß** der pH-Wert während der Hydrolyse in dem Reaktor (14) kleiner als 1 ist, der Druck zwischen 30 und 34 bar liegt und die Temperatur von 190 bis 240°C beträgt.

6. Verfahren nach einem der Ansprüche 1 bis 4, **dadurch gekennzeichnet, daß** der pH-Wert während der Hydrolyse in dem Reaktor (14) kleiner als 2 ist, der Druck mehr als 34 bar beträgt und die Temperatur über 240°C liegt.

7. Verfahren nach einem der Ansprüche 1 bis 6, **dadurch gekennzeichnet, daß** das Zuführen von Material in den Behälter (4) über einen ersten Druckbehälter (3) erfolgt, der mit Einlaß- und Auslaßschnecken (1, 2), Pumpen oder dergleichen ausgerüstet ist und in welchem das Material unter gleichzeitigem Mischen unter einem Druck erwärmt wird, der im allgemeinen halb so groß wie der Druck in dem Behälter (4) ist, wobei die Entnahme des Materials aus dem Reaktor (14) über ein Ventil (11) zu einem weiteren Druckbehälter (12) erfolgt, der mit einer Entnahmevorrichtung (13) versehen ist, aus welcher Entspannungsdampf durch eine Leitung dem ersten Druckbehälter (3) zugeführt wird.

8. Verfahren nach Anspruch 7, **dadurch gekennzeichnet, daß** das dem Reaktor (14) entnommene Material eine Siebung in einem Sieb passiert, wo das Lignin durchgeleitet wird, während die feste, nicht hydrolysierte Phase abgetrennt und wieder durch den Reaktor (14) geleitet wird, bis das im wesentlichen gesamte Material hydrolysiert worden ist.

## Revendications

1. Procédé pour obtenir des réactions chimiques et une hydrolyse continue de matières contenant de la cellulose et/ou de l'amidon dans un réacteur tubulaire (14) ayant une extrémité d'entrée et une extrémité de sortie, **caractérisé en ce que** la matière, qui n'est pas traitée chimiquement ou bien se compose de matières biologiques qui ont été traitées au préalable d'une certaine manière ou qui sont traitées par exemple dans une préhydrolyse afin de procurer dans ce cas une matière initiale ayant une teneur réduite en hémicellulose, est délivrée avec un mélange simultané à travers une cuve tubulaire (4) et est, avec une température qui est adaptée à une hydrolyse et une pression correspondante, transportée jusqu'à l'extrémité d'entrée du réacteur (14), où la matière dans une zone limitée (6) est exposée à un mélange intensif avec des produits chimiques (7) ajoutés ici, qui ajustent momentanément la matière à une valeur de pH faible et commencent une hydrolyse, qui est arrêtée à l'extrémité de sortie du réacteur (14), où la matière dans une zone limitée (8) est exposée à un mélange intensif avec des produits chimiques (9), par exemple un alcali, ajoutés ici, qui neutralisent momentanément la matière, arrêtant ainsi l'hydrolyse.

2. Procédé selon la revendication 1, **caractérisé en ce que** le réacteur tubulaire (14) entre les deux zones de mélange (6, 8) est maintenu rempli de la matière sur toute sa section transversale.

3. Procédé selon la revendication 1 ou 2, **caractérisé en ce qu'**au moins une zone de mélange supplémentaire (16) est prévue dans le réacteur (14) afin de mélanger d'autres produits chimiques (15) dans le but de produire des produits avec des composés intermédiaires qui sont produits par une réaction jusqu'à la zone de mélange supplémentaire et qui constituent au moins un des réactifs dans le produit engendré.

4. Procédé selon l'une quelconque des revendications 1 à 3, **caractérisé en ce que** les surfaces de paroi du réacteur (14) sont refroidies ou chauffées le long d'au moins une zone définie afin d'obtenir un refroidissement ou un chauffage partiel, respectivement, de la matière dans le réacteur près des surfaces de paroi de façon à minimiser la friction de glissement.

5. Procédé selon l'une quelconque des revendications 1 à 4, **caractérisé en ce que** la valeur de pH pendant l'hydrolyse dans le réacteur (14) est inférieure à 1, la pression étant de 30 à 40 bar et la température étant de 190 à 240 centigrades.

6. Procédé selon l'une quelconque des revendications 1 à 4, **caractérisé en ce que** la valeur de pH pendant l'hydrolyse dans le réacteur (14) est inférieure à 2, la pression étant supérieure à 34 bar et la température étant supérieure à 240 centigrades.

7. Procédé selon l'une quelconque des revendications 1 à 6, **caractérisé en ce que** l'alimentation en matière dans la cuve (4) est réalisée par l'intermédiaire d'une première cuve sous pression (3) équipée de vis d'alimentation et d'évacuation (1, 2), de pompes correspondantes ou similaires, dans laquelle la matière est chauffée avec un mélange simultané à une pression qui est en général égale à la moitié de la pression dans la cuve (4), et l'évacuation de la matière du réacteur (14) est réalisée en passant par une vanne (11) jusqu'à une autre cuve sous pression (12) équipée d'un dispositif d'évacuation (13), depuis lequel de la vapeur de détente est acheminée par l'intermédiaire d'un tuyau jusqu'à ladite première cuve sous pression (3).

8. Procédé selon la revendication 7, **caractérisé en ce que** la matière qui est évacuée du réacteur (14) subit un criblage dans un crible, où la lignine passe, alors que la phase non hydrolysée solide est séparée et remise en circulation à travers le réacteur (14) jusqu'à ce que pratiquement toute la matière ait été hydrolysée.
